# EUROPEAN PATENT APPLICATION

(11) **EP 4 806 676 A1**
(43) Date of publication of application: **16.09.2026**
(21) Application number: 25162663.6
(22) Date of filing: 10.03.2025
(51) Int. Cl.: B60G 17/0165, B60G 17/018

(54) **CONTROL OF VEHICLE SUSPENSION SYSTEMS**

(71) Applicant: Volvo Truck Corporation, 405 08 Göteborg (SE)
(72) Inventor: GELSO, Esteban, VÄSTRA FRÖLUNDA (SE); SADEGHI KATI, Maliheh, ÖJERSJÖ (SE); LAINE, Leo, GÖTEBORG (SE); ASHOK, Nrupathunga, GÖTEBORG (SE)
(74) Representative: Ström & Gulliksson AB

(57) **Abstract**

A computer system and computer-implemented method are disclosed for determining a control input for a suspension system of a vehicle. The computer system comprises processing circuitry configured to: determine an objective relating to motion of the vehicle, select a format for a control input for the suspension system from a plurality of formats based on the objective, the plurality of formats comprising two or more of: a first format comprising a request for a vertical force to be implemented on a wheel of the vehicle by the suspension system, a second format comprising a request for a vertical velocity of a wheel of the vehicle to be implemented by the suspension system, and a third format comprising a request for a vertical position of a wheel of the vehicle to be implemented by the suspension system; and determine a control input for the suspension system according to the selected format and based on the objective.

## Description

### TECHNICAL FIELD

The disclosure relates generally to vehicle control. In particular aspects, the disclosure relates to control of vehicle suspension systems. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

### BACKGROUND

Vehicle suspension systems are designed to enhance driving comfort, stability, and safety by absorbing shocks and maintaining tyre contact with the road. Such systems typically include components such as springs, dampers, and linkages that work together to reduce the impact of road irregularities, ensuring a smooth ride. Additionally, suspension systems help maintain vehicle handling and control by distributing weight evenly during acceleration, braking, and cornering, improving traction and stability.

With advancements in computational capabilities, vehicle suspension technologies are rapidly improving to make active suspension a possibility on production vehicles. As more manufacturers and suppliers move towards centralised control, the interface to request actuation becomes increasingly important. Vehicle suspension systems are usually controlled by providing a request to position a wheel or axle at a certain vertical position (e.g. relative to zero or a ride height). However, this form of control is not always sufficient or optimal.

It is therefore desired to develop a solution for suspension system control that addresses or at least mitigates some of these issues.

### SUMMARY

This disclosure provides systems, methods and other approaches for determining a control input for a suspension system of a vehicle. In particular, control inputs for the suspension system can have one of three formats: a first format including a request for a vertical force to be implemented on an axle or a wheel of the vehicle, a second format including a request for a vertical velocity of an axle or a wheel of the vehicle, and a third format including a request for a vertical position of an axle or a wheel of the vehicle. One of the formats is selected based on an objective related to motion of the vehicle, and a control input can be determined accordingly. By selecting an appropriate format for a control input from a plurality of different formats, suspension systems of the vehicle can be controlled to provide improved active control of vertical forces and movements of a wheel corner of a vehicle based on an objective for motion the vehicle, thereby improving vehicle performance and control.

According to a first aspect of the disclosure, there is provided a computer system for determining a control input for a suspension system of a vehicle, the computer system comprising processing circuitry configured to: determine an objective relating to motion of the vehicle; select a format for a control input for the suspension system from a plurality of formats based on the objective, the plurality of formats comprising two or more of: a first format comprising a request for a vertical force to be implemented on an axle or a wheel of the vehicle by the suspension system, a second format comprising a request for a vertical velocity of an axle or a wheel of the vehicle to be implemented by the suspension system, and a third format comprising a request for a vertical position of an axle or a wheel of the vehicle to be implemented by the suspension system; and determine a control input for the suspension system according to the selected format and based on the objective.

The first aspect of the disclosure may seek to provide a computer system capable of selecting a format for a control input for a suspension system from a plurality of different formats, where the selected format is appropriate for a particular objective relating to motion of the vehicle. In this way, suspension systems of the vehicle can be controlled to provide improved active control of vertical forces and movements of a wheel corner of a vehicle, thereby improving vehicle performance and control.

Optionally in some examples, including in at least one preferred example, the first format comprises one or more limits for the vertical velocity and/or vertical position of the axle or the wheel. A technical benefit may include that the vertical force to be implemented on the wheel is directly controlled, while the vertical position and/or vertical velocity are limited without being directly controlled.

Optionally in some examples, including in at least one preferred example, the second format comprises one or more limits for the vertical force and/or vertical position of the axle or the wheel. A technical benefit may include that the vertical velocity of the wheel is directly controlled, while the vertical position and/or vertical force are limited without being directly controlled.

Optionally in some examples, including in at least one preferred example, the third format comprises one or more limits for the vertical force and/or vertical velocity of the axle or the wheel. A technical benefit may include that the vertical position of the wheel is directly controlled, while the vertical velocity and/or vertical force are limited without being directly controlled.

Optionally in some examples, including in at least one preferred example, the processing circuitry is configured to: acquire parameters relating to motion of the vehicle comprising one or more of a wheel slip or spin, a road slope, a road banking, a turn radius, an upcoming road irregularity, a road roughness, a surface friction, environmental conditions, route mapping, an operator input, and a vehicle condition; and determine the objective based on the acquired parameters. A technical benefit may include that the objective, and therefore the appropriate format, can be determined based on parameters that are relevant to current upcoming motion of the vehicle, thereby providing improved performance and control of the vehicle.

Optionally in some examples, including in at least one preferred example, the objective comprises one or more of controlling traction or wheel slip, increasing ride comfort, ensuring safe operation of the vehicle, performing a manoeuvre, and increasing efficiency. A technical benefit may include that a format can be selected that is appropriate to one of a number of different objectives, thereby providing improved performance and control of the vehicle.

Optionally in some examples, including in at least one preferred example, the selected format is the first format, and the control input comprises a request for a vertical force to be implemented on the axle or the wheel based on one or more of a desired longitudinal force and a desired lateral force to be applied at the wheel. A technical benefit may include that traction can be controlled in a longitudinal direction, a lateral direct, or both, thereby improving traction control.

Optionally in some examples, including in at least one preferred example, the selected format is the second format, and the control input comprises a request for a vertical velocity of the axle or the wheel based on an upcoming road irregularity. A technical benefit may include enabling the wheel to move over the irregularity with reduced or minimal sprung mass displacement, thereby improving ride comfort.

Optionally in some examples, including in at least one preferred example, the selected format is the third format, and the control input comprises a request for a vertical position of the axle or the wheel based on detection of damage relating to the axle or the wheel. A technical benefit may include that the wheel or axle may be lifted completely off the ground, thereby ensuring safe operation of the vehicle.

Optionally in some examples, including in at least one preferred example, the vehicle is a multi-unit vehicle combination, and the processing circuitry is configured to determine a combination-level control input and one or more unit-level control inputs. A technical benefit may include that appropriate control inputs can be determined for different individual units of a multi-unit vehicle combination, thereby improving vehicle performance and control.

Optionally in some examples, including in at least one preferred example, the processing circuitry is further configured to transmit the determined control input to the suspension system. A technical benefit may include that a suspension system can be operated and/or controlled in a manner appropriate to a particular objective relating to motion of the vehicle.

According to a second aspect of the disclosure, there is provided a vehicle comprising the computer system of the first aspect. The second aspect of the disclosure may seek to provide a vehicle capable of selecting a format for a control input for a suspension system from a plurality of different formats, where the selected format is appropriate for a particular objective relating to motion of the vehicle. In this way, suspension systems of the vehicle can be controlled to provide improved active control of vertical forces and movements of a wheel corner of a vehicle, thereby improving vehicle performance and control.

According to a third aspect of the disclosure, there is provided a computer-implemented method for determining a control input for a suspension system of a vehicle, the method comprising: determining, by processing circuitry of a computer system, an objective relating to motion of the vehicle; selecting, by the processing circuitry, a format for a control input for the suspension system from a plurality of formats based on the objective, the plurality of formats comprising two or more of: a first format comprising a request for a vertical force to be implemented on an axle or a wheel of the vehicle by the suspension system, a second format comprising a request for a vertical velocity of an axle or a wheel of the vehicle to be implemented by the suspension system, and a third format comprising a request for a vertical position of an axle or a wheel of the vehicle to be implemented by the suspension system; and determining, by the processing circuitry, a control input for the suspension system according to the selected format and based on the objective.

The third aspect of the disclosure may seek to provide a computer system capable of selecting a format for a control input for a suspension system from a plurality of different formats, where the selected format is appropriate for a particular objective relating to motion of the vehicle. In this way, suspension systems of the vehicle can be controlled to provide improved active control of vertical forces and movements of a wheel corner of a vehicle, thereby improving vehicle performance and control.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to select a format for a control input for a suspension system from a plurality of different formats, where the selected format is appropriate for a particular objective relating to motion of the vehicle. In this way, suspension systems of the vehicle can be controlled to provide improved active control of vertical forces and movements of a wheel corner of a vehicle, thereby improving vehicle performance and control.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to select a format for a control input for a suspension system from a plurality of different formats, where the selected format is appropriate for a particular objective relating to motion of the vehicle. In this way, suspension systems of the vehicle can be controlled to provide improved active control of vertical forces and movements of a wheel corner of a vehicle, thereby improving vehicle performance and control.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows a side view of a vehicle according to an example of the disclosure.
**FIG. 2** is a flow chart of a computer-implemented method according to an example of the disclosure.
**FIG. 3** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

Vehicle suspension systems are designed to enhance driving comfort, stability, and safety by absorbing shocks and maintaining tyre contact with the road. Additionally, suspension systems help maintain vehicle handling and control by distributing weight evenly during acceleration, braking, and cornering, improving traction and stability. With advancements in computational capabilities, vehicle suspension technologies are rapidly improving to make active suspension a possibility on production vehicles. However, current approaches to control of suspension systems are not always sufficient or optimal.

To remedy this, systems and methods are proposed for determining a control input for a suspension system of a vehicle. In particular, control inputs for the suspension system can have one of three formats: a first format including a request for a vertical force to be implemented on an axle or a wheel of the vehicle, a second format including a request for a vertical velocity of an axle or a wheel of the vehicle, and a third format including a request for a vertical position of an axle or a wheel of the vehicle. One of the formats is selected based on an objective related to motion of the vehicle, and a control input can be determined accordingly. By selecting an appropriate format for a control input from a plurality of different formats, suspension systems of the vehicle can be controlled to provide improved active control of vertical forces and movements of a wheel corner of a vehicle based on an objective for motion the vehicle, thereby improving vehicle performance.

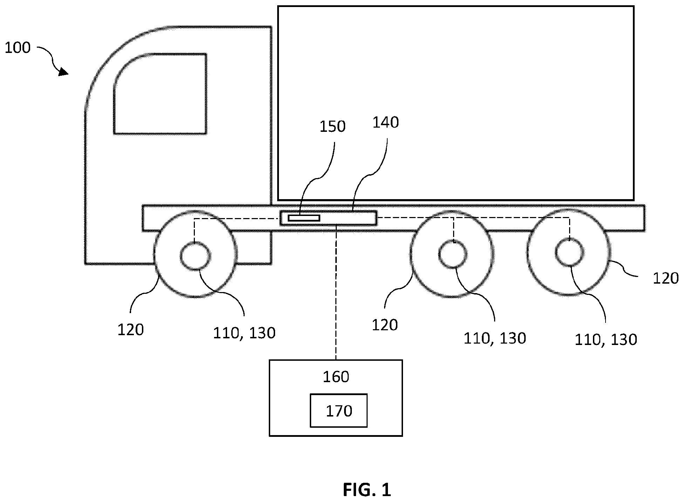

**FIG. 1** schematically shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. The vehicle **100** comprises a number of axles **110,** each generally having two or more wheels **120.** Whilst three axles **110** are shown, it will be appreciated that any suitable number of axles **110** may be provided. It will also be appreciated that any number of the axles **110** may be driven axles. The vehicle **100** normally comprises a steered axle, or more than one steered axle.

The vehicle **100** may comprise one or more suspension systems **130.** A suspension system **130** may be associated with an axle **110** or one or more wheels **120** of the vehicle **100.** For example, a suspension system **130** may be associated with each axle **110** or wheel **120** of the vehicle **100.** In some examples, a suspension system **130** may be considered to be associated with a wheel corner of the vehicle **100** (i.e. a part of the vehicle body in which a wheel **120** is housed). A suspension system **130** may be, for example, a hydraulic or electro-mechanical suspension system. Control inputs for a suspension system **130** may include requests relating to vertical motion of the axle **110** and/or wheel **120** associated with the suspension system **130,** for example a vertical force to be implemented by the axle **110** and/or wheel **120** on a road surface, a vertical velocity of the axle **110** and/or wheel **120,** and a vertical position of the axle **110** and/or wheel **120.**

The vehicle **100** may comprise one or more sources of propulsion. For example, the vehicle **100** may comprise one or more electrical machines (not shown) such as electric motors and/or generators. The vehicle **100** may comprise one or more batteries (not shown) configured to provide power to the electrical machines. In some examples, the vehicle **100** may also include another source of propulsion, for example an internal combustion engine (ICE). The vehicle **100** also comprises a drivetrain (not shown) to deliver mechanical power from the propulsion source (the electrical machines or the ICE) to the wheels **120.** The vehicle **100** may be driven solely by ICE, solely by electric machines, or by a combination of electric and combustion engine-based motors. The electrical machines are configured to drive, e.g. provide torque and/or steering to, one or more axles **110** or individual wheels **120** of the vehicle **100.** The electrical machines can supply either a positive (propulsion) or negative (braking) force. The use of electrical machines to supply a negative force is known as regenerative braking, in which case the electrical machines may be operated as generators, in order to recover energy during braking.

Furthermore, the vehicle **100** may comprise one or more sets of service brakes (not shown). The service brakes can supply a negative (braking) force. The service brakes may be, for example, frictional brakes such as pneumatic brakes. Pneumatic brakes use a compressor to fill the brake with air, which may be powered by the batteries. In some examples, the brakes may be electro-mechanical brakes. The energy recovered from regenerative braking by the electrical machines can be stored in the batteries, and so regenerative braking may generally be preferred over the use of service brakes. The electrical machines, service brakes, and ICE of a vehicle **100** may be referred to as actuators or motion support devices (MSDs) of the vehicle **100.**

In some examples, the vehicle **100** may be a vehicle combination comprising a number of units, including a tractor unit and at least one trailing unit. A tractor unit is generally the foremost unit in a vehicle combination, and may comprise the cabin for the driver, including steering controls, dashboard displays and the like. Generally, the tractor unit is used to provide propulsion power for the vehicle combination **100.** A trailing unit is generally used to store goods that are being transported by the vehicle combination **100.** A trailing unit may be a truck, trailer, dolly and the like. A trailing unit may also provide propulsion to the vehicle combination **100.** In such examples, each unit may comprise its own electrical machines, batteries, service brakes, and the like. In this way, all units may provide propulsion to the vehicle combination **100.**

The vehicle **100** may include a controller **140** comprising processing circuitry **150.** The controller **140** is configured to control components of the vehicle, for example the suspension system(s) **130.** As such, the controller **140** may be communicatively coupled to the suspension system(s) **130.** **FIG. 1** shows a common controller **140** for all suspension systems **130** of the vehicle **100,** however it will be appreciated that each suspension system **130** may have its own respective controller **140.** In many cases, the controller **140** may be implemented in the structure of a suspension system **130** itself. The controller **140** may be a microcontroller. In examples where the vehicle **100** is a vehicle combination, the vehicle **100** may include a global controller and a plurality of unit controllers, for example a controller for each unit. Vehicle motion management may therefore be available on a unit level to receive requests from a manual or virtual driver to coordinate the propulsion, braking and steering.

The controller **140** (or its processing circuitry **150)** may receive control signals from a global controller **160** comprising processing circuitry **170.** As such, the global controller **160** may be communicatively coupled to the controller **140.** The global controller **160** may be a vehicle control unit configured to perform various vehicle (unit) control functions, such as vehicle motion management. The global controller **160** may be local to the vehicle **100,** for example implemented as part of the controller **140,** or may be a remote system, implemented at a distance from the vehicle **100.**

The communicative coupling (e.g. between the controller **140** and the suspension system(s) **130** and/or between the global controller **160** and the controller **140)** may be implemented in any suitable way, for example via a circuit or any other wired, wireless, or network connection known in the art. Furthermore, the communicative coupling may be implemented as a direct connection or may be implemented as a connection via one or more intermediate entities.

One function of the controller **140** and the global controller **160** is to provide control inputs for the vehicle **100,** for example to control operations of the suspension system(s) **130.** Control inputs for a suspension system **130** may include requests relating to vertical motion of the axle **110,** wheel **120,** and/or wheel corner associated with the suspension system **130.** Current suspension control systems send a reference relative position (relative to a zero-reference or a ride height), which the vehicle controller(s) attempt to implement, e.g. using valve actuation, with no regard to the vertical speed or forces that result from this actuation. It is therefore proposed to provide an interface for suspension control that involves a holistic approach that takes into account the interconnection between the vertical position, vertical velocity, and vertical force implemented by a suspension system.

In particular, an interface is provided in which a plurality of formats for control inputs for a suspension system **130** are provided. The motion of an axle **110,** wheel **120,** and/or wheel corner associated with a suspension system **130** may be denoted as a function of a vertical position z (absolute or relative to a reference) to be implemented by the suspension system **130,** a vertical velocity *ż* to be implemented by the suspension system **130,** and a vertical force *F_{z}* to be implemented by the suspension system **130.** As such, the plurality of formats available in the interface may include formats relating to one or more (e.g. each) of these motion parameters. The formats may relate to the structure and content of a control input/message that is sent from a controller **140, 160** to a suspension system **130** for implementation by the suspension system **130.**

The particular format that is selected may be determined based on an objective related to motion of the vehicle **100.** The objective may comprise one or more of controlling traction or slip of a wheel **120,** increasing ride comfort, ensuring safe operation of the vehicle **100,** performing a manoeuvre, and increasing efficiency. The objective may be determined based on acquired parameters relating to motion of the vehicle **100.** Such parameters may comprise one or more of wheel slip or spin, a turn radius, a road slope, road banking, an upcoming road irregularity, a road roughness, a surface friction, environmental conditions (such as an ambient temperature), route mapping, an operator input, a vehicle condition, and the like. The skilled person will understand how different objectives can be determined based on conditions of the vehicle **100** and its motion. In the following, the formats and control inputs will be discussed in relation to an individual wheel **120,** but it will be appreciated that similar concepts may be applied in relation to an axle **110,** a group of wheels, or a wheel corner.

A first format comprises a request for a vertical force *F_{z}* to be implemented on a wheel **120** by a suspension system **130.** In some instances, it may be desired to increase or decrease the vertical force acting between the wheel **120** and the ground. For instance, increasing the vertical force will increase the longitudinal force provided by the wheel **120** on the ground, and thereby improve traction (e.g. a longitudinal and/or lateral force provided by the wheel **120** on the ground) and reduce wheel slip. This may be desired, for example, when the wheel **120** is stuck or slipping significantly, and may be implemented in acceleration or deceleration (including control of a braking system). This may also be desired, for example, to increase traction on inner wheels during a turn (e.g. at a roundabout) based on a detected or determined turn radius. This may also be desired, for example, to increase traction on detection of an upcoming road slope, either uphill or downhill. The first format may also be selected to ensure safe operation of the vehicle **100,** for example to prevent rollover when road banking is detected, or to increase traction when low surface friction is detected. first format may also be selected to enable a manoeuvre to be performed by the vehicle **100,** for example to increase traction during a lane change that may be determined by a route planning module or an operator input.

When the first format is selected, a control input for a suspension system **130** may be provided including a request for a vertical force *F_{z}* to be implemented on the wheel **120** to increase the vertical force acting between the wheel **120** and the ground. The first format (and thereby the corresponding control input) may also include one or more limits for the vertical position z and/or vertical velocity *ż* of the wheel **120.** These limits may be limits implemented on the suspension **130,** for example obtained by considering global values determined based on the task at hand and the particular relevant parameters, while considering any contribution from the suspension system. In this way, the vertical force *F_{z}* to be implemented on the wheel **120** is directly controlled, while the vertical position z and/or vertical velocity *ż* are limited without being directly controlled.

A second format comprises a request for a vertical velocity *ż* of a wheel **120** to be implemented by a suspension system **130.** In some instances, it may be desired to improve ride comfort by controlling impulse movements of the wheel **120.** For example, it may be detected that an irregularity in the road, such as a bump, pothole, or the like, is upcoming. This can be detected based on mapping data, one or more sensors looking ahead of the vehicle **100,** or by one or more sensors associated with a wheel itself **120** (for use in controlling a following wheel). For the smoothest ride, it is desirable that the wheel **120** traces the profile of the irregularity without increasing forces on wheel **120,** which would in turn affect ride comfort. This can be achieved by controlling the vertical velocity *ż* to produce a reduced or minimal sprung mass displacement, therefore providing better comfort.

When the second format is selected, a control input for a suspension system **130** may be provided including a request for a vertical velocity *ż* of a wheel **120** to be implemented by the suspension system **130** such that the wheel moves over the irregularity with reduced or minimal sprung mass displacement. The second format (and thereby the corresponding control input) may also include one or more limits for the vertical position z of the wheel **120** and/or vertical force *F_{z}* on the wheel **120.** In this way, the vertical velocity *ż* of the wheel **120** is directly controlled, while the vertical position z and/or vertical force *F_{z}* are limited without being directly controlled.

A third format comprises a request for a vertical position z of a wheel **120** to be implemented by a suspension system **130.** In some instances, it may be desired to increase or decrease the vertical position of the wheel relative to a certain reference point, for example the ground or the chassis of the vehicle **100.** For example, to ensure safe operation of the vehicle **100** during an emergency such as tire explosion or damage to a corner of the vehicle **100,** it may be desired to lift a wheel **120** completely off the ground (which has a higher priority than vertical velocity *ż* and vertical force *F_{z}*). It may also be desired to ensure safe operation by increasing clearance on a rough road by moving the vehicle corner position away from the chassis. The third format may also be selected to improve ride comfort, for example to negotiate an upcoming irregularity in the road (to maintain a corner vehicle position so the wheel does not enter a pothole but passes over it) or to take account of detected road banking. The third format may also be selected to enable a manoeuvre to be performed by the vehicle **100,** for example to lower one side of the vehicle (e.g. a bus) to allow passengers to disembark, to roll the chassis into a turn e.g. at a roundabout, or to to maintain a certain force at the wheel when going over an irregularity in the road which would benefit vehicle handling. These instances may be determined by a route planning module or an operator input. The third format may also be selected to improve efficiency of vehicle operation, for example by moving the corner position closer to the vehicle chassis to reduce drag on highways, detected for example by a route planning module or based on a road roughness (or smoothness).

When the third format is selected, a control input for a suspension system **130** may be provided including a request for a vertical position z of a wheel **120** to be implemented by the suspension system **130.** The third format (and thereby the corresponding control input) may also include one or more limits for the vertical velocity *ż* of the wheel **120** and/or vertical force *F_{z}* on the wheel **120.** In this way, the vertical position *z* of the wheel **120** is directly controlled, while the vertical velocity *ż* and/or vertical force *F_{z}* are limited without being directly controlled.

Once a format has been selected, the resulting control inputs, including control values and limits as discussed above, may be determined based on the objective. As will be appreciated by the skilled person, the resulting vertical force *F_{z}*, vertical velocity z, or vertical position z input will be determined based on the task at hand and the particular relevant parameters. For example, when an upcoming irregularity in the road is detected, the profile of the irregularity can be used to determine the specific vertical velocity *ż* input that is required. The control inputs may also be determined based on other parameters, such as vehicle velocity, vehicle acceleration, a vehicle loading situation, weather or traffic conditions, and the like. By determining control inputs according to a selected format, the most relevant control parameter of the suspension system **130** for a particular objective can be quickly and efficiently controlled.

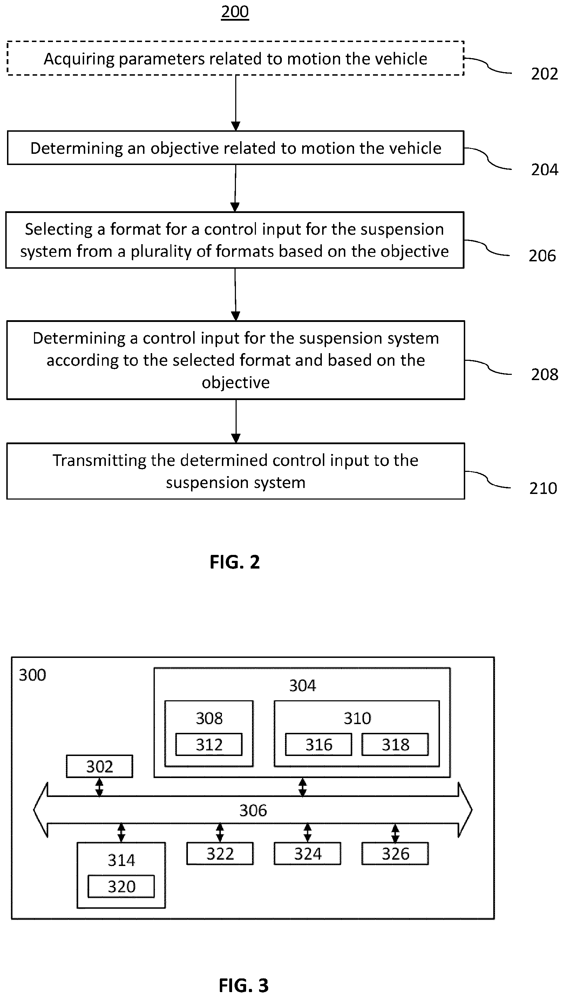

**FIG. 2** is a flow chart of a computer-implemented method **200** according to an example. The method **200** is for determining a control input for a suspension system of a vehicle. The method **200** enables one of a plurality of formats for the control input to be selected based on an objective related to motion of the vehicle, such that an appropriate control input is provided that takes into account the interconnection between vertical position, vertical velocity, and vertical force. The method **200** may be implemented by processing circuitry of a computer system (e.g., the processing circuitry **150** of the controller(s) **140,** or the processing circuitry **170** of the global controller **160** described in relation to **FIG. 1****).**

At **202,** parameters related to motion of the vehicle **100** may be acquired. The parameters may comprise one or more wheel slip or spin, a turn radius, a road slope, road banking, an upcoming road irregularity (such as speed bumps and potholes), a road roughness (or smoothness), a surface friction, environmental conditions (such as an ambient temperature for detecting icy conditions), route mapping (or planning e.g. from a tactical layer of a vehicle control system), an operator input (such as steering input and/or a positive or negative propulsion torque or longitudinal force), a vehicle condition (such as a tyre condition or damage status), and the like. These parameters may be acquired using vehicle systems or connected remote systems, as known in the art.

At **204,** an objective related to motion of the vehicle **100** is determined. The objective may comprise one or more of controlling traction or slip of a wheel **120,** increasing ride comfort, ensuring safe operation of the vehicle **100,** performing a manoeuvre, and increasing efficiency. The objective may be determined in any suitable manner known in the art, for example based on an operator input. In some examples, the objective may be determined based on acquired parameters relating to motion of the vehicle **100.** The skilled person will understand how different objectives can be determined based on operator inputs, conditions of the vehicle **100** and its surroundings, and vehicle motion.

At **206,** a format for a control input for the suspension system is selected from a plurality of formats based on the determined objective. As discussed above, the plurality of formats from which a selection can be made include two or more of a first format comprising a request for a vertical force *F_{z}* to be implemented on a wheel **120** by the suspension system **130,** a second format comprising a request for a vertical velocity *ż* of a wheel **120** to be implemented by the suspension system **130,** and a third format comprising a request for a vertical position z of a wheel **120** to be implemented by the suspension system **130.**

At **208,** a control input for the suspension system **130** is determined according to the selected format and based on the determined objective. The skilled person will understand the vertical force *F_{z}*, vertical velocity *ż*, or vertical position z input will be determined based on the task at hand and the particular relevant parameters. The control input may also include one or more limits for other vertical motion parameters. The control input may be for a single suspension system **130** associated with one or more axles **110** or wheels **120** or may be a control input for multiple (e.g. all) suspension systems **130** of the vehicle **100.** In instances where the vehicle **100** is a multi-unit vehicle combination, the control input may comprise a combination-level control input and/or one or more unit-level control inputs.

In some examples, the suspension system(s) **130** may provide relevant information to the controller(s) **140, 160** to enable an appropriate control input to be determined. For example, the suspension system(s) **130** may report status information such as a current vertical force, vertical velocity, and/or vertical position acting on or being applied to the wheel **120.** The suspension system(s) **130** may also report capabilities relating to vertical force, vertical velocity, and/or vertical position, e.g. maximum and/or minimum values of these parameters that the suspension system **130** is capable of applying to the wheel **120** or that the wheel **120** is capable of implementing/withstanding. The capabilities of a given suspension system **130** may include dependencies with other suspension systems **130** since changing suspension parameters at one part of the vehicle **100** may affect the status at one or more other parts of the vehicle **100.** Therefore, the capability of a first suspension system **130** could be sent together with the potential reduced capabilities of the one or more second suspension systems **130** as a function of the first suspension system **130.**

In an example where the first format is selected, the control input comprises a request for a vertical force *F_{z}* to be implemented on a wheel **120** by an associated suspension system **130.** For example, if the first format is selected based on a desire to increase traction between a wheel and the ground (e.g. a longitudinal and/or lateral force provided by the wheel **120** on the ground), a corresponding vertical force *F_{z}* to be implemented on the wheel **120** by the suspension system **130** can be determined (for example by determining a current vertical force acting on the wheel **120** and determining a remaining force to be applied to reach the required vertical force). Such a control input may also include one or more limits for the vertical position z and/or vertical velocity *ż* of the wheel **120.** In this way, the vertical force *F_{z}* to be implemented on the wheel **120** is directly controlled, while the vertical position z and/or vertical velocity *ż* are limited without being directly controlled. A limit for vertical position z may be determined based on desired suspension travel (for example such that the suspension does not hit bump stops), while the limit for vertical velocity *ż* may be based on capabilities of the suspension system **130** (for example, in case of hydraulic cylinder, where the wheel **120** can only move as fast a pump can supply fluid) and/or an efficiency limit.

In an example where the second format is selected, the control input comprises a request for a vertical velocity *ż* of a wheel **120** to be implemented by an associated suspension system **130.** For example, if the second format is selected to negotiate an upcoming road irregularity, the profile of the irregularity can be used to determine the specific vertical velocity *ż* input that is required. Such a control input may also include one or more limits for the vertical position z of the wheel **120** and/or vertical force *F_{z}* on the wheel **120.** In this way, the vertical velocity *ż* of the wheel **120** is directly controlled, while the vertical position z and/or vertical force *F_{z}* are limited without being directly controlled. A limit for vertical position z may be determined based on desired suspension travel (for example such that the suspension does not hit bump stops), height of the irregularity, and the like, while the limit for force *F_{z}* may be based on a current or expected vertical force before encountering the irregularity (for example as a margin around an expected value to ensure the wheel **120** does not lose contact with the road).

In an example where the third format is selected, the control input comprises a request for a vertical position z of a wheel **120** to be implemented by an associated suspension system **130.** For example, if the third format is selected based on detection of damage relating to the wheel **120** (e.g. a tyre blow out), it may be desired to lift the wheel **120** completely off the ground (which has a higher priority than vertical velocity *ż* and vertical force *F_{z}*). Such a control input may also include one or more limits for the vertical velocity *ż* of the wheel **120** and/or vertical force *F_{z}* on the wheel **120.** In this way, the vertical position z of the wheel **120** is directly controlled, while the vertical velocity *ż* and/or vertical force *F_{z}* are limited without being directly controlled. A limit for vertical velocity *ż* may be determined based on capabilities of the suspension system **130** and/or an efficiency limit, while the limit for force *F_{z}* may be based on capabilities of the wheel **120** (e.g. the design vertical force that the wheel **120** can handle).

At **210,** the control input is transmitted to the suspension system(s) **130.** In line with the discussion above, the control input may be transmitted to a single suspension system **130** associated with one or more axles **110** or wheels **120** or transmitted to multiple (e.g. all) suspension systems **130** of the vehicle **100.**

The method **200** enables one of a plurality of formats for the control input to be selected based on an objective related to motion of the vehicle, such that an appropriate control input is provided that takes into account the interconnection between vertical position, vertical velocity, and vertical force. In this way, suspension systems of the vehicle can be controlled to provide improved active control of vertical forces and movements of a wheel corner of a vehicle dependent on conditions and objectives for motion the vehicle, thereby improving vehicle performance.

**FIG. 3** is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **302** (e.g., processing circuitry including one or more processor devices or control units), a memory **304,** and a system bus **306.** The computer system **300** may include at least one computing device having the processing circuitry **302.** The system bus **306** provides an interface for system components including, but not limited to, the memory **304** and the processing circuitry **302.** The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302.** A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318.** All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302.** In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302.** The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (140, 160, 300) for determining a control input for a suspension system (130) of a vehicle (100), the computer system (140, 160, 300) comprising processing circuitry (150, 170, 302) configured to: determine an objective relating to motion of the vehicle (100); select a format for a control input for the suspension system (130) from a plurality of formats based on the objective, the plurality of formats comprising two or more of: a first format comprising a request for a vertical force to be implemented on an axle (110) or a wheel (120) of the vehicle (100) by the suspension system (130), a second format comprising a request for a vertical velocity of an axle (110) or a wheel (120) of the vehicle (100) to be implemented by the suspension system (130), and a third format comprising a request for a vertical position of an axle (110) or a wheel (120) of the vehicle (100) to be implemented by the suspension system (130); and determine a control input for the suspension system (130) according to the selected format and based on the objective.
Example 2: The computer system (140, 160, 300) of example 1, wherein the first format comprises one or more limits for the vertical velocity and/or vertical position of the axle (110) or the wheel (120).
Example 3: The computer system (140, 160, 300) of example 1 or 2, wherein the second format comprises one or more limits for the vertical force and/or vertical position of the axle (110) or the wheel (120).
Example 4: The computer system (140, 160, 300) of any preceding example, wherein the third format comprises one or more limits for the vertical force and/or vertical velocity of the axle (110) or the wheel (120).
Example 5: The computer system (140, 160, 300) of any preceding example, wherein the processing circuitry (150, 170, 302) is configured to: acquire parameters relating to motion of the vehicle (100) comprising one or more of a wheel slip or spin, a road slope, a road banking, a turn radius, an upcoming road irregularity, a road roughness, a surface friction, environmental conditions, route mapping, an operator input, and a vehicle condition; and determine the objective based on the acquired parameters.
Example 6: The computer system (140, 160, 300) of any preceding example, wherein the objective comprises one or more of controlling traction or wheel slip, increasing ride comfort, ensuring safe operation of the vehicle (100), performing a manoeuvre, and increasing efficiency.
Example 7: The computer system (140, 160, 300) of any preceding example, wherein the selected format is the first format, and the control input comprises a request for a vertical force to be implemented on the axle (110) or the wheel (120) based on one or more of a desired longitudinal force and a desired lateral force to be applied at the wheel (120).
Example 8: The computer system (140, 160, 300) of any preceding example, wherein the selected format is the second format, and the control input comprises a request for a vertical velocity of the axle (110) or the wheel (120) based on an upcoming road irregularity.
Example 9: The computer system (140, 160, 300) of any preceding example, wherein the selected format is the third format, and the control input comprises a request for a vertical position of the axle (110) or the wheel (120) based on detection of damage relating to the axle (110) or the wheel (120).
Example 10: The computer system (140, 160, 300) of any preceding example, wherein the vehicle (100) is a multi-unit vehicle combination, and the processing circuitry (150, 170, 302) is configured to determine a combination-level control input and one or more unit-level control inputs.
Example 11: The computer system (140, 160, 300) of any preceding example, wherein the processing circuitry (150, 170, 302) is further configured to transmit the determined control input to the suspension system (130).
Example 12: A vehicle (100) comprising the computer system (140, 160, 300) of any preceding example.
Example 13: A computer-implemented method (200) for determining a control input for a suspension system (130) of a vehicle (100), the method (200) comprising: determining (204), by processing circuitry (150, 170, 302) of a computer system (140, 160, 300), an objective relating to motion of the vehicle (100); selecting (206), by the processing circuitry (150, 170, 302), a format for a control input for the suspension system (130) from a plurality of formats based on the objective, the plurality of formats comprising two or more of: a first format comprising a request for a vertical force to be implemented on an axle (110) or a wheel (120) of the vehicle (100) by the suspension system (130), a second format comprising a request for a vertical velocity of an axle (110) or a wheel (120) of the vehicle (100) to be implemented by the suspension system (130), and a third format comprising a request for a vertical position of an axle (110) or a wheel (120) of the vehicle (100) to be implemented by the suspension system (130); and determining (208), by the processing circuitry (150, 170, 302), a control input for the suspension system (130) according to the selected format and based on the objective.
Example 14: The computer-implemented method (200) of example 13, wherein the first format comprises one or more limits for the vertical velocity and/or vertical position of the axle (110) or the wheel (120).
Example 15: The computer-implemented method (200) of example 13 or 14, wherein the second format comprises one or more limits for the vertical force and/or vertical position of the axle (110) or the wheel (120).
Example 16: The computer-implemented method (200) of any of examples 13 to 15, wherein the third format comprises one or more limits for the vertical force and/or vertical velocity of the axle (110) or the wheel (120).
Example 17: The computer-implemented method (200) of any of examples 13 to 16, comprising acquiring (202), by the processing circuitry (150, 170, 302), parameters relating to motion of the vehicle (100) comprising one or more of a wheel slip or spin, a road slope, a road banking, a turn radius, an upcoming road irregularity, a road roughness, a surface friction, environmental conditions, route mapping, an operator input, and a vehicle condition; and determining (204), by the processing circuitry (150, 170, 302), the objective based on the acquired parameters.
Example 18: The computer-implemented method (200) of any of examples 13 to 17, wherein the objective comprises one or more of controlling traction or wheel slip, increasing ride comfort, ensuring safe operation of the vehicle (100), performing a manoeuvre, and increasing efficiency.
Example 19: The computer-implemented method (200) of any of examples 13 to 18, wherein the selected format is the first format, and the control input comprises a request for a vertical force to be implemented on the axle (110) or the wheel (120) based on one or more of a desired longitudinal force and a desired lateral force to be applied at the wheel (120).
Example 20: The computer-implemented method (200) of any of examples 13 to 19, wherein the selected format is the second format, and the control input comprises a request for a vertical velocity of the axle (110) or the wheel (120) based on an upcoming road irregularity.
Example 21: The computer-implemented method (200) of any of examples 13 to 20, wherein the selected format is the third format, and the control input comprises a request for a vertical position of the axle (110) or the wheel (120) based on detection of damage relating to the axle (110) or the wheel (120).
Example 22: The computer-implemented method (200) of any of examples 13 to 21, wherein the vehicle (100) is a multi-unit vehicle combination, the method comprising determining (208), by the processing circuitry (150, 170, 302), a combination-level control input and one or more unit-level control inputs.
Example 23: The computer-implemented method (200) of any of examples 13 to 22, further comprising transmitting (210), by the processing circuitry (150, 170, 302), the determined control input to the suspension system (130).
Example 24: A computer program product comprising program code for performing, when executed by processing circuitry (150, 170, 302), the computer-implemented method (200) of any of examples 13 to 24.
Example 25: A non-transitory computer-readable storage medium comprising instructions, which when executed by processing circuitry (150, 170, 302), cause the processing circuitry (150, 170, 302) to perform the computer-implemented method (200) of any of examples 13 to 24.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.
It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (140, 160, 300) for determining a control input for a suspension system (130) of a vehicle (100), the computer system (140, 160, 300) comprising processing circuitry (150, 170, 302) configured to:
determine an objective relating to motion of the vehicle (100);
select a format for a control input for the suspension system (130) from a plurality of formats based on the objective, the plurality of formats comprising two or more of:
a first format comprising a request for a vertical force to be implemented on an axle (110) or a wheel (120) of the vehicle (100) by the suspension system (130),
a second format comprising a request for a vertical velocity of an axle (110) or a wheel (120) of the vehicle (100) to be implemented by the suspension system (130), and
a third format comprising a request for a vertical position of an axle (110) or a wheel (120) of the vehicle (100) to be implemented by the suspension system (130); and
determine a control input for the suspension system (130) according to the selected format and based on the objective.

2. The computer system (140, 160, 300) of claim 1, wherein the first format comprises one or more limits for the vertical velocity and/or vertical position of the axle (110) or the wheel (120).

3. The computer system (140, 160, 300) of claim 1 or 2, wherein the second format comprises one or more limits for the vertical force and/or vertical position of the axle (110) or the wheel (120).

4. The computer system (140, 160, 300) of any preceding claim, wherein the third format comprises one or more limits for the vertical force and/or vertical velocity of the axle (110) or the wheel (120).

5. The computer system (140, 160, 300) of any preceding claim, wherein the processing circuitry (150, 170, 302) is configured to:
acquire parameters relating to motion of the vehicle (100) comprising one or more of a wheel slip or spin, a road slope, a road banking, a turn radius, an upcoming road irregularity, a road roughness, a surface friction, environmental conditions, route mapping, an operator input, and a vehicle condition; and
determine the objective based on the acquired parameters.

6. The computer system (140, 160, 300) of any preceding claim, wherein the objective comprises one or more of controlling traction or wheel slip, increasing ride comfort, ensuring safe operation of the vehicle (100), performing a manoeuvre, and increasing efficiency.

7. The computer system (140, 160, 300) of any preceding claim, wherein the selected format is the first format, and the control input comprises a request for a vertical force to be implemented on the axle (110) or the wheel (120) based on one or more of a desired longitudinal force and a desired lateral force to be applied at the wheel (120).

8. The computer system (140, 160, 300) of any preceding claim, wherein the selected format is the second format, and the control input comprises a request for a vertical velocity of the axle (110) or the wheel (120) based on an upcoming road irregularity.

9. The computer system (140, 160, 300) of any preceding claim, wherein the selected format is the third format, and the control input comprises a request for a vertical position of the axle (110) or the wheel (120) based on detection of damage relating to the axle (110) or the wheel (120).

10. The computer system (140, 160, 300) of any preceding claim, wherein the vehicle (100) is a multi-unit vehicle combination, and the processing circuitry (150, 170, 302) is configured to determine a combination-level control input and one or more unit-level control inputs.

11. The computer system (140, 160, 300) of any preceding claim, wherein the processing circuitry (150, 170, 302) is further configured to transmit the determined control input to the suspension system (130).

12. A vehicle (100) comprising the computer system (140, 160, 300) of any preceding claim.

13. A computer-implemented method (200) for determining a control input for a suspension system (130) of a vehicle (100), the method (200) comprising:
determining (204), by processing circuitry (150, 170, 302) of a computer system (140, 160, 300), an objective relating to motion of the vehicle (100);
selecting (206), by the processing circuitry (150, 170, 302), a format for a control input for the suspension system (130) from a plurality of formats based on the objective, the plurality of formats comprising two or more of:
a first format comprising a request for a vertical force to be implemented on an axle (110) or a wheel (120) of the vehicle (100) by the suspension system (130),
a second format comprising a request for a vertical velocity of an axle (110) or a wheel (120) of the vehicle (100) to be implemented by the suspension system (130), and
a third format comprising a request for a vertical position of an axle (110) or a wheel (120) of the vehicle (100) to be implemented by the suspension system (130); and
determining (208), by the processing circuitry (150, 170, 302), a control input for the suspension system (130) according to the selected format and based on the objective.

14. A computer program product comprising program code for performing, when executed by processing circuitry (150, 170, 302), the computer-implemented method (200) of claim 13.

15. A non-transitory computer-readable storage medium comprising instructions, which when executed by processing circuitry (150, 170, 302), cause the processing circuitry (150, 170, 302) to perform the computer-implemented method (200) of claim 13.
